# FASCICULE DE BREVET EUROPEEN

(11) **EP 2 756 989 B1**
(45) Date de publication et mention de la délivrance du brevet: **24.04.2019**
(21) Numéro de dépôt: 14151214.5
(22) Date de dépôt: 15.01.2014
(51) Int. Cl.: B60P 7/15

(54) **Système de support et/ou d'arrimage de marchandises, notamment pour vehicule routier de transport**
Halte- und/oder Verstauungssystem von Waren, insbesondere für Straßentransportfahrzeuge
System for supporting and/or lashing goods, in particular for a road transport vehicle

(30) Priorité: 17.01.2013 FR 1350392
(43) Date de publication de la demande: 23.07.2014
(73) Titulaire: Jean Chereau SAS, 50220 Ducey (FR)
(72) Inventeur: Gavard, Jean-Marc, 50870 PLOMB (FR); Menard, Charles-Eric, 35570 CESSON SEVIGNE (FR); Dubourg, Vincent, 50220 JUILLEY (FR); Huard, Jérôme, 50300 SAINT MARTIN DES CHAMPS (FR)
(74) Mandataire: Casalonga

(56) Documents cités:
- EP-A1- 0 588 761
- EP-A1- 2 011 688
- FR-A1- 2 894 902
- US-A- 2 859 710
- US-A1- 2011 142 564

## Description

La présente invention concerne le domaine des systèmes de support et/ou d'arrimage de marchandises.

Le document US 2011/0142564 A1 divulgue un système de support et/ou d'arrimage de marchandises selon le préambule de la revendication 1.

Une utilisation particulièrement intéressante de l'invention concerne le support et/ou l'arrimage de marchandises à l'intérieur d'une carrosserie destinée à être montée sur le châssis d'un véhicule routier de transport de marchandises tel qu'un camion, une semi-remorque, une remorque ou un porteur.

L'espace intérieur de chargement d'une carrosserie est délimité par deux flancs verticaux opposés, un plancher, un plafond, une face avant et une face arrière assemblés entre eux.

Pour optimiser le volume de stockage de l'espace intérieur de chargement, il est connu de monter sur les flancs de la carrosserie une pluralité de rails verticaux à l'intérieur desquels coulissent des poutres de support de marchandises. Chaque poutre de support s'étend transversalement entre deux rails en regard et coulissent entre une position de rangement située sous le plafond de la carrosserie et une position d'utilisation ou de chargement de marchandises pouvant par exemple être située à mi-hauteur des flancs. Il est ainsi possible de prévoir le chargement des marchandises sur deux niveaux, à savoir sur le plancher de la carrosserie et sur les poutres de support.

Dans le cas d'une carrosserie frigorifique, il est parfois nécessaire de compartimenter l'espace intérieur de chargement pour disposer de compartiments maintenus à des niveaux de température différents. Dans ce but, la carrosserie frigorifique comporte généralement au moins une cloison qui peut être articulée à rotation sous le plafond et mobile entre une position de stockage le long dudit plafond et une position rabattue de séparation dans laquelle elle s'étend verticalement jusqu'au plancher. L'utilisation d'une telle cloison de séparation est toutefois incompatible avec un tel système de rails verticaux et de poutres de support.

Par ailleurs, pour éviter tout déplacement des marchandises posées sur les poutres de support ou sur le plancher de la carrosserie, par exemple lors de freinages brusques du véhicule, des poutres spécifiques dites d'arrimages sont généralement prévues derrière ou devant les marchandises. De telles poutres sont montées sur des rails d'arrimage qui s'étendent longitudinalement sur les flancs de la carrosserie.

Lors du déchargement des marchandises, les poutres d'arrimage sont retirées des rails associés, ce qui peut poser des problèmes de stockage voire de perte.

Pour remédier à ces inconvénients, il est possible de prévoir une carrosserie comprenant deux rails de rangement s'étendant longitudinalement et montés en regard sur les flancs de la carrosserie au voisinage du plafond, deux rails de chargement s'étendant longitudinalement, et deux rails de liaison verticaux s'étendant entre les rails de chargement et de rangement pour permettre le coulissement de poutres transversales d'une position de chargement vers une position de rangement, et inversement. Les poutres peuvent remplir une fonction de support ou une fonction d'arrimage des marchandises.

Classiquement, pour réaliser le blocage en translation des poutres le long des rails de chargement, il est nécessaire d'actionner manuellement un système mécanique par exemple un doigt de verrouillage de chaque côté des poutres pour qu'il pénètre à l'intérieur d'un trou correspondant du rail de chargement associé.

Le verrouillage de l'ensemble des poutres le long des rails de chargement peut donc être relativement long à réaliser. Ce problème se pose également lors des opérations de déverrouillage qui nécessitent aussi une action manuelle aux deux extrémités de chaque poutre. Par ailleurs, les doigts de verrouillage sont exposés aux impacts lors de la manipulation des poutres et sont fréquemment tordus. Ceci nécessite des opérations de maintenance.

La présente invention vise à remédier à ces inconvénients.

Plus particulièrement, la présente invention vise à prévoir un système de support et/ou d'arrimage de marchandises, notamment pour carrosserie de véhicule routier de transport, permettant un verrouillage et déverrouillage des poutres plus simples et plus rapides.

La présente invention vise également à prévoir un système présentant une sûreté de fonctionnement accrue.

Dans un mode de réalisation, un système de support et/ou d'arrimage de marchandises, notamment pour véhicule routier de transport, comprend au moins deux rails disposés en regard, au moins une poutre de support et/ou d'arrimage de marchandises montée à l'intérieur des rails en étant coulissante le long desdits rails, ladite poutre s'étendant transversalement entre lesdits rails, et des moyens de verrouillage pour obtenir un blocage de ladite poutre par rapport aux rails. Les moyens de verrouillage comprennent au moins une came de blocage disposée sur ladite poutre et au moins un élément de coincement aptes à pénétrer l'un à l'intérieur de l'autre et à coopérer par conjugaison de forme pour obtenir le blocage de la poutre de support et/ou d'arrimage après une première rotation de ladite poutre, et aptes à permettre le déblocage après une seconde rotation de la poutre.

Avantageusement, l'élément de coincement est fixe par rapport au rail associé.

De préférence, la came de blocage est disposée à une extrémité de la poutre et l'élément de coincement est décalé vers l'intérieur par rapport à une piste du rail associé.

La came de blocage et l'élément de coincement peuvent être conformés pour permettre le passage de la poutre de support et/ou d'arrimage de la position bloquée vers la position débloquée, et inversement, par une rotation comprise entre 45 degrés et 90 degrés, et de préférence égale à 90 degrés.

De préférence, le rail associé à la came de blocage comprend une pluralité d'éléments de coincement répartis sur toute la longueur dudit rail ou sur toute la longueur d'une portion dudit rail.

Dans un mode de réalisation, le ou les éléments de coincement comprennent des encoches, la came de blocage venant se loger dans une des encoches dans la position bloquée de la poutre de support et/ou d'arrimage.

La poutre de support et/ou d'arrimage comprend un corps et un galet monté en saillie à chaque extrémité du corps et logé à l'intérieur du rail associé. Dans un mode de réalisation, au moins un desdits galets est fixe en rotation par rapport au corps et conformé de sorte à permettre une rotation de ladite poutre de la position bloquée vers la position débloquée uniquement dans un sens de rotation. La came de blocage peut être disposée entre le corps et le galet associé.

Dans un mode de réalisation, dans la position bloquée de la poutre de support et/ou d'arrimage, la came de blocage s'étend en saillie au delà du galet associé et un espace subsiste entre ledit galet et une piste inférieure du rail associé.

La poutre de support et/ou d'arrimage peut comprendre, à chaque extrémité du corps, un embout de support du galet associé, l'un des deux embouts étant monté coulissant par rapport audit corps.

De préférence, le corps de la poutre comprend au moins un bord supérieur arrondi. Le corps peut comprendre, sur une face inférieure, au moins une nervure s'étendant sur la majeure partie de ladite face et, sur une face supérieure opposée, une gorge complémentaire.

Dans un mode de réalisation, le système comprend au moins deux rails de chargement disposés en regard et s'étendant longitudinalement, deux rails de rangement disposés en regard au-dessus des rails de chargement et s'étendant longitudinalement, et deux rails de liaison disposés en regard et reliant les rails de chargement et de rangement, ladite poutre de support et/ou d'arrimage étant montée coulissante le long des rails de rangement, de liaison et de chargement. Le système peut également comprendre deux crémaillères disposées en regard, qui peuvent être décalées vers l'intérieur par rapport aux pistes des rails de rangement et pourvues chacune d'une pluralité de crans de blocage, ladite poutre de support et/ou d'arrimage coopérant avec deux crans en regard pour le blocage longitudinal de ladite poutre par rapport auxdits rails de rangement. Le système peut encore comprendre, du côté du rail de liaison associé, un cran antichute présentant une profondeur supérieure à celle des crans de blocage et apte à coopérer avec la poutre de support et/ou d'arrimage.

L'invention concerne également une carrosserie pour véhicule routier de transport de marchandises comprenant un système de support et/ou d'arrimage de marchandises tel que défini précédemment et monté sur deux flancs verticaux opposés de ladite carrosserie.

La présente invention sera mieux comprise à l'étude de la description détaillée d'un mode de réalisation pris à titre d'exemple nullement limitatif et illustré par les dessins annexés, sur lesquels :
- la figure 1 est une vue de côté intérieure d'une carrosserie selon un exemple de réalisation,
- la figure 2 est une vue de détail de la figure 1,
- la figure 3 est une vue en perspective d'une poutre de la carrosserie de la figure 1,
- la figure 4 est une vue de détail de la poutre de la figure 3,
- la figure 5 est une vue de détail de la poutre de la figure 3 sur laquelle un galet a été retiré,
- les figures 6 et 7 sont des vues partielles en coupe d'une des poutres de la carrosserie de la figure 1 dans une position de rangement,
- la figure 8 est une vue partielle en perspective des poutres de la carrosserie de la figure 1 dans la position de rangement,
- la figure 9 est une vue partielle en perspective d'une des poutres de la carrosserie de la figure 1 lors de son coulissement vers une position de chargement,
- la figure 10 est une vue partielle en perspective de la poutre de la figure 9 dans la position bloquée de chargement,
- les figures 11 et 12 sont des vues partielles en coupe de la poutre des figures 9 et 10 dans la bloquée de chargement,
- la figure 13 est une vue schématique illustrant le pivotement d'une des poutres de la carrosserie de la figure 1 de la bloquée de chargement vers une position débloquée, et
- la figure 14 est une vue partielle en perspective de deux poutres de la carrosserie de la figure 1 lors de leur coulissement vers une position de chargement.

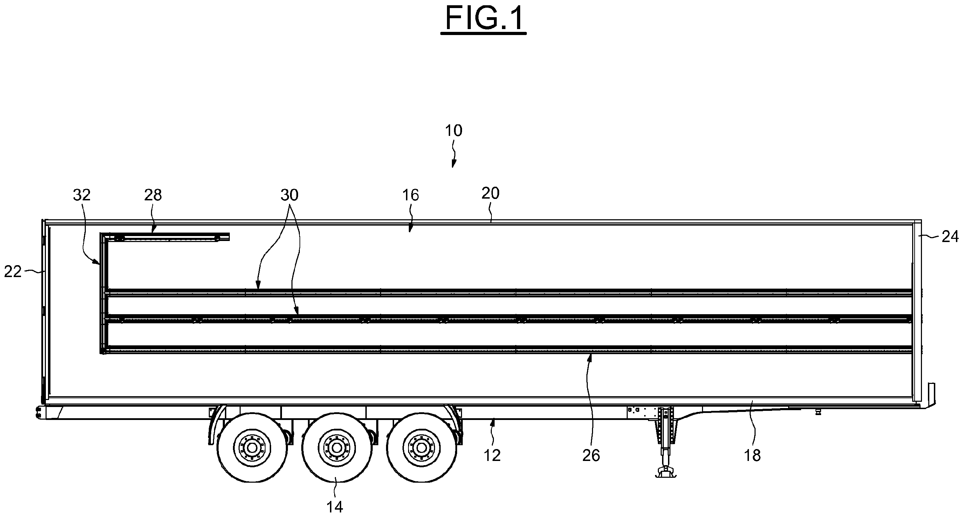

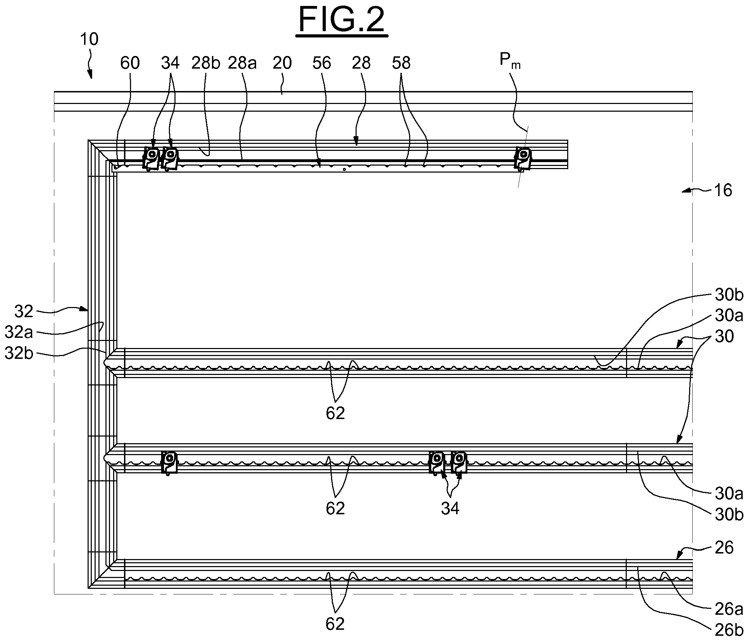

Sur les figures 1 et 2, on a représenté une carrosserie, référencée 10 dans son ensemble, montée sur un châssis 12 de véhicule de transport routier s'étendant longitudinalement et soutenu par des roues 14.

La carrosserie 10 comprend deux flancs 16 verticaux opposés s'étendant longitudinalement, un plancher 18, un plafond 20, une face arrière 22 et une face avant 24 assemblés entre eux pour délimiter un espace de chargement intérieur. Les flancs 16 sont identiques et symétriques l'un par rapport à l'autre en considérant un plan vertical médian longitudinal de la carrosserie. Chaque flanc 16 comprend un rail 26 de chargement inférieur situé à distance du plancher 18, un rail 28 de rangement supérieur, deux rails 30 de chargement intermédiaires disposés au-dessus du rail 26 de chargement inférieur et en dessous du rail 28 de rangement supérieur, et un rail de liaison 32 reliant entre eux lesdits rails. Les rails 26, 30 de chargement ou de service inférieur et intermédiaires sont identiques. Les rails 26 à 32 d'un flanc 16 sont en regard avec les rails correspondants de l'autre flanc et symétriques les uns par rapport aux autres en considérant le plan vertical médian longitudinal de la carrosserie.

La carrosserie 10 comprend également une pluralité de poutres 34 de support et/ou d'arrimage de marchandises montées coulissantes à l'intérieur de l'espace de chargement le long des rails 26 à 32 entre une position de rangement et une position de chargement ou d'utilisation, comme cela sera décrit plus en détail par la suite. Les poutres 34 sont montées coulissantes à l'intérieur des rails 26 à 32. Sur les figures, seules quelques poutres 34 ont été représentées. Dans l'exemple de réalisation illustré, les poutres 34 sont identiques entre elles. Les poutres 34 s'étendent transversalement entre les rails 26 à 32. A cet égard, les rails 26, 28, 30 comprennent des chemins de guidage ou pistes inférieures 26a, 28a, 30a et supérieures 26b, 28b, 30b longitudinales en regard l'une par rapport à l'autre et reliées par un fond vertical. Chaque rail 32 de liaison comprend également des chemins de guidage ou pistes 32a, 32b opposées et reliées par un fond.

Dans l'exemple de réalisation illustré, les rails 26, 30 de chargement s'étendent longitudinalement à partir de l'extrémité avant dudit flanc jusqu'au voisinage de l'extrémité arrière. L'extrémité arrière de chaque rail 26, 30 de chargement est prolongée vers le haut par le rail 32 de liaison commun auxdits rails, l'extrémité supérieure dudit rail étant prolongée par le rail 28 de rangement. Le rail 32 de liaison s'étend entre les extrémités arrière du rail 26 de chargement inférieur et du rail 28 de rangement supérieur en étant reliés auxdits rails. Le rail 28 de rangement est situé au-dessus des rails 26, 30 de chargement et au voisinage du plafond 20. Le rail 32 de liaison se raccorde également aux extrémités arrière des rails 30 de chargement intermédiaires. Le rail 28 s'étend longitudinalement vers l'avant de la carrosserie. La dimension longitudinale du rail 28 est inférieure à celle des rails 26 et 30, par exemple dans un rapport de l'ordre de un à six, de sorte à ce que le rail 28 reste localisé dans une zone arrière de la carrosserie 10. Dans l'exemple de réalisation illustré, les rails 26, 30 de chargement et le rail 28 de rangement s'étendent horizontalement et le rail 32 de liaison s'étend verticalement. Les rails 26 à 32 sont fixés sur le flanc 16 associé du côté de l'espace de chargement intérieur par tout moyen approprié, par exemple par vissage ou par collage.

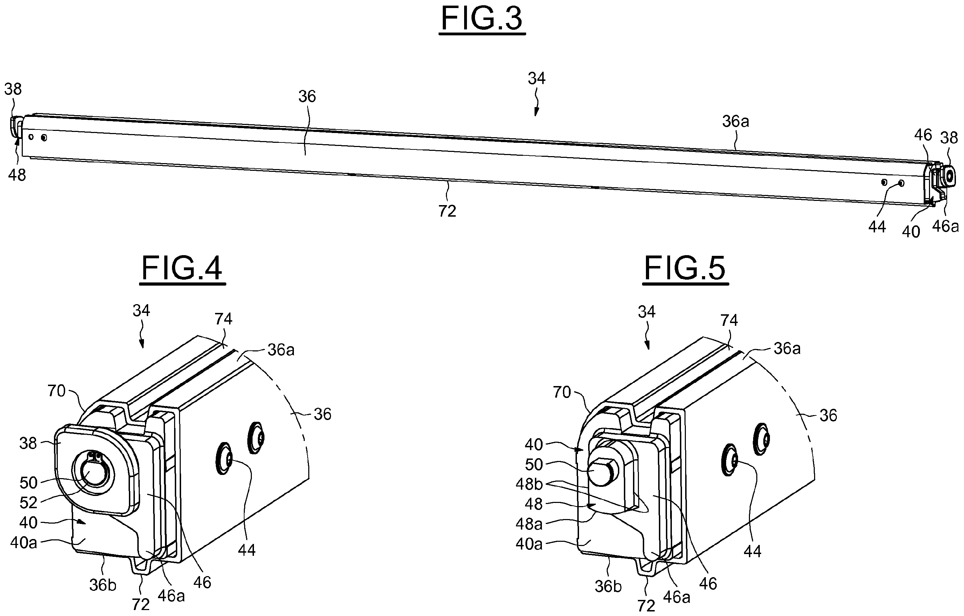

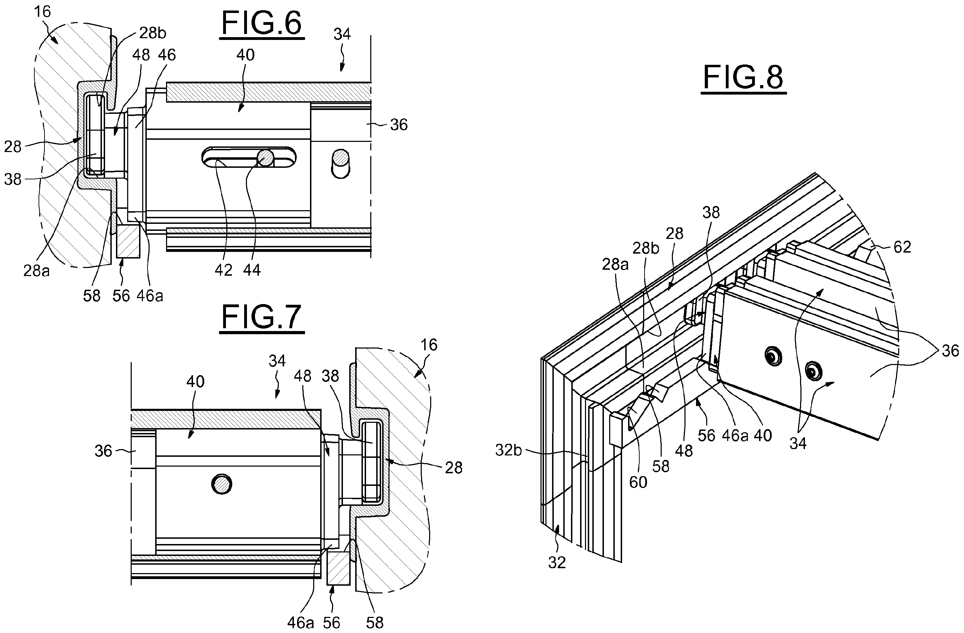

Comme illustré aux figures 3 à 5, chaque poutre 34 de support et/ou d'arrimage comprend un corps 36 parallélépipédique creux à chaque extrémité duquel est monté en saillie un galet 38. La face supérieure 36a du corps forme une surface plane de support de marchandises. Le corps 36 comprend également une face inférieure 36b opposée à la face supérieure 36a, ces faces étant reliées par deux faces verticales opposées formant des faces d'appui pour les marchandises lorsque la poutre est utilisée en tant que poutre d'arrimage. Chaque galet 38 est destiné à venir s'engager et à glisser à l'intérieur des rails 26 à 32. Chaque galet 38 présente une forme générale ovoïde. Chaque galet 38 est fixé sur un embout 40 de support monté au niveau d'une des extrémités longitudinales du corps 36 en étant en partie logé à l'intérieur dudit corps. D'un côté de la poutre 34, l'embout 40 de support est fixé sur ladite poutre et de l'autre côté l'embout 40 est monté coulissant à l'intérieur de la poutre. Dans ce but, ledit embout 40 comprend une rainure oblongue 42 (figure 6) à l'intérieur de laquelle est montée une vis 44 qui est fixée sur la poutre. Ledit embout 40 est apte à coulisser librement par rapport à la poutre 34 de sorte à pouvoir s'affranchir des éventuels défauts de planéité des flancs 16 verticaux sur lesquels sont montés les rails 26 à 32. Les embouts 40 et les galets 38 d'une même poutre 34 sont symétriques entre eux.

Chaque embout 40 de support comprend une partie en saillie 46 formée à partir d'une face frontale 40a de l'embout venant en regard du flanc 16 associé et elle-même en saillie par rapport à l'extrémité longitudinale associée du corps 36 de la poutre. Chaque partie en saillie 46 comprend un doigt 46a de verrouillage fixe et s'étendant verticalement vers le bas, i.e. du côté de la face inférieure 36b du corps de la poutre. Chaque embout 40 comprend également une came 48 de blocage s'étendant transversalement vers l'extérieur à partir de la partie en saillie 46 et un axe 50 prolongeant transversalement vers l'extérieur ladite came. La came 48 est distincte du galet 38. La came 48 est située au-dessus du doigt 46a de verrouillage. Chaque came 48 de blocage et chaque doigt 46a de verrouillage est fixe en rotation par rapport au corps 36 de la poutre. Chaque came 48 et chaque doigt 46a est fixé sur l'embout 40 de support. Les cames 48 et les doigts 46a de verrouillage sont situés aux extrémités de la poutre 34. Dans le mode de réalisation illustré, le galet 38 est fixé sur l'axe 50 par l'intermédiaire d'un circlips 52. L'axe 50 comprend un méplat afin que le galet 38 soit bloqué en rotation par rapport à la poutre. Comme cela sera décrit plus en détail par la suite, le doigt 46a de verrouillage et la came 48 de blocage de chaque embout sont respectivement conformés pour permettre la retenue de la poutre 36 par rapport aux rails 28 de rangement et la retenue de ladite poutre par rapport aux rails 26, 30 de chargement.

L'embout 40 de support est avantageusement réalisé en une seule pièce, par exemple en aluminium. En variante, le doigt 46a de verrouillage, la came 48 de blocage et l'axe 50 de support pourrait être rapportés sur l'embout. Le galet 38 est avantageusement réalisé dans un matériau plus souple que celui utilisé pour l'embout 40, par exemple en matière synthétique, et résistant au frottement. En variante, le galet 38 peut être réalisé dans le même matériau que l'embout 40 de support, voire être réalisé en une seule pièce avec ledit embout.

En se référant de nouveau à la figure 2, chaque flanc 16 comprend une crémaillère 56 fixée sur ledit flanc et située en-dessous de la piste 28a inférieure du rail de rangement associé. Une pluralité d'encoches ou crans 58 identiques est formée sur la surface supérieure de chaque crémaillère. Les crans 58 sont orientés vers le haut en direction de la piste 28a associée. Les crans 58 sont décalés vers l'intérieur de la carrosserie par rapport aux pistes 28a et 28b, et plus généralement par rapport au rail 28 de rangement.

Comme illustré plus visiblement aux figures 6 à 8, dans la position de rangement des poutres 34 de support et/ou d'arrimage à l'intérieur de la carrosserie, chaque doigt 46a de verrouillage de l'embout pénètre à l'intérieur d'un des crans 58 de la crémaillère associée. On obtient ainsi le blocage longitudinal des poutres 34 de support et/ou d'arrimage par rapport aux rails 28 de rangement. Les doigts 46a des poutres forment des moyens de verrouillage coopérant avec des moyens de verrouillage complémentaires des flancs 16 formés par les crans 58 pour obtenir le blocage des poutres 34 dans le sens longitudinal à l'intérieur des rails 28 de rangement. Les doigts 46a permettre d'obtenir un blocage des poutres 34 dans la position de rangement par pénétration dans les crans 58 des crémaillères sans qu'il soit nécessaire de prévoir une manipulation par un opérateur à chaque extrémité de chaque poutre.

Dans le mode de réalisation illustré, les doigts 46a de verrouillage formés sur les embouts 40 des poutres permettent d'obtenir, par coopération avec les crans 58 des crémaillères, le blocage desdites poutres. En variante, il pourrait être possible de prévoir des doigts de verrouillage formés directement sur le corps 36 de chaque poutre et coopérant avec lesdits crans 58. Dans ce cas, la came 48 de blocage prévue sur chaque embout 40 de support pourrait s'étendre directement à partir de la face frontale 40a dudit embout, ou encore être formée sur l'axe de support du galet s'étendant à partir de ladite face frontale.

Comme illustré plus visiblement à la figure 2, dans la position verrouillée de rangement le long des rails 28, pour chaque poutre 34 de support et/ou d'arrimage, un plan médian Pₘ longitudinal de ladite poutre est incliné du côté opposé au rail de liaison 32 en considérant un plan vertical. A titre indicatif, l'inclinaison du plan médian Pₘ par rapport au plan vertical peut par exemple être de l'ordre de 15 degrés. Dans la position de rangement, l'inclinaison de chaque poutre 34 est conservée sous l'effet de son propre poids, ce qui limite le risque de sortie intempestive des doigts 46a de verrouillage hors des crans 58 des crémaillères. Dans la position de rangement, le centre de gravité de chaque poutre 34 est décalé vers l'avant de la carrosserie par rapport aux doigts 46a de verrouillage de la poutre.

Comme illustré plus visiblement à la figure 8, de sorte à éviter un coulissement non souhaité des poutres 34 de support et/ou d'arrimage du rail 28 de rangement vers le rail 32 de liaison, chaque crémaillère 56 comprend encore, au niveau de l'extrémité située du côté dudit rail 32, une encoche ou cran 60 antichute présentant une profondeur supérieure à celle des crans 58 de blocage et apte à coopérer avec les doigts 46a de verrouillage des poutres. Le cran 60 permet de retenir longitudinalement au niveau du rail 28 de rangement associé la poutre 34 adjacente au rail 32 de liaison en cas de déblocage incontrôlé des doigts 46a de verrouillage hors des crans 58, par exemple lors de la manipulation de ladite poutre par un opérateur. Le cran 60 de chaque flanc forme un obstacle permettant d'éviter un coulissement non souhaité des poutres 34 du rail 28 de rangement vers le rail 32 de liaison.

Le cran 60 de chaque crémaillère forme une chicane pour les doigts 46a de verrouillage de la poutre en cours de manipulation nécessitant de la reculer légèrement et de la faire de sorte que lesdits doigts puissent passer au-dessus du bord supérieur desdites crans pour la faire coulisser du rail 28 de rangement vers le rail 32 de liaison. Dans l'exemple de réalisation illustré, le cran 60 antichute est formé sur la crémaillère 56 comprenant les crans 58 de blocage des poutres. En variante, il pourrait être possible de prévoir sur chaque flanc une pièce spécifique pour réaliser cette fonction.

En se référant de nouveau à la figure 2, pour réaliser le blocage longitudinal des poutres 34 à l'intérieur des rails 26 ou 30 de chargement, chacun des rails comprend une pluralité d'encoches 62 disposées sur toute la longueur dudit rail. La forme et la disposition des encoches 62 sont identiques d'un rail 26, 30 de chargement à l'autre. Les encoches 62 sont formées sur le rail 26, 30 associé et orientées vers le haut en direction de la piste 26b, 30b dudit rail. Dans le mode de réalisation illustré les encoches 62 présentent une forme générale en U. Les encoches 62 sont réparties sur toute la longueur du rail 26, 30 associé afin de pouvoir répartir et bloquer les poutres 34 sur toute la longueur de la carrosserie et disposer des palettes de marchandises sur un second niveau de chargement en hauteur par rapport au plancher de la carrosserie et/ou arrimer les marchandises disposées sur le plancher 18 ou sur les poutres 34 placées au niveau du rail 26 de chargement inférieur.

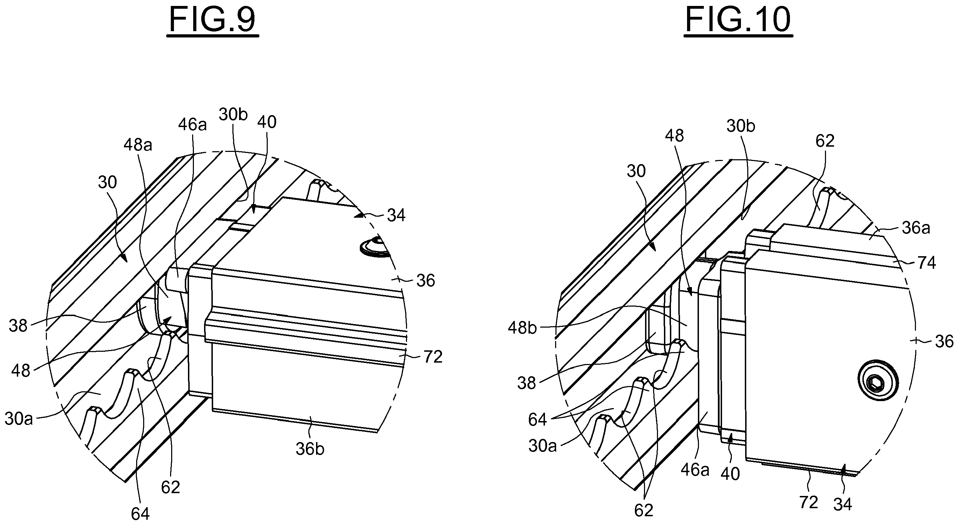

Comme illustré plus visiblement aux figures 9 et 10, les encoches 62 du rail 30 de chargement sont décalées vers l'intérieur de la carrosserie par rapport aux pistes 30a inférieure et 30b supérieure. Les encoches 62 sont distinctes des pistes 30a, 30b. Le fond des encoches 62 est aligné verticalement, i.e. tangent, avec la piste 30a inférieure. Entre deux encoches 62 successives est formée une dent 64 s'étendant verticalement vers le haut. Les encoches 62 sont en concordance de forme avec une partie des cames 48 de blocage des poutres. La disposition des encoches 62 sur l'autre rail 30 intermédiaire et sur le rail 26 inférieur sont identiques. Dans l'exemple de réalisation illustré, les encoches 62 sont formées directement sur les rails 26, 30 de chargement associé. En variante, il pourrait être possible de réaliser ces encoches sur une barre et de fixer cette barre sur le rail associé ou encore sur le flanc 16.

Comme illustré aux figures 5, 9 et 10, chaque came 48 de blocage des poutres présente un profil extérieur irrégulier, i.e. non circulaire. Chaque came 48 comprend une partie inférieure 48a convexe prévue pour épouser le fond de l'encoche 62 associée et qui est prolongée par deux bords 48b plats opposés. Chaque came 48 des poutres pénètre en partie à l'intérieur d'une encoche 62 associée, la partie de ladite came en saillie à l'intérieur de l'encoche étant en concordance de forme avec ladite encoche. Les cames 48 de chaque poutre et les encoches 62 associées forment des moyens de verrouillage coopérant par conjugaison de forme pour obtenir le blocage de ladite poutre le long des rails 26 ou 30 de chargement.

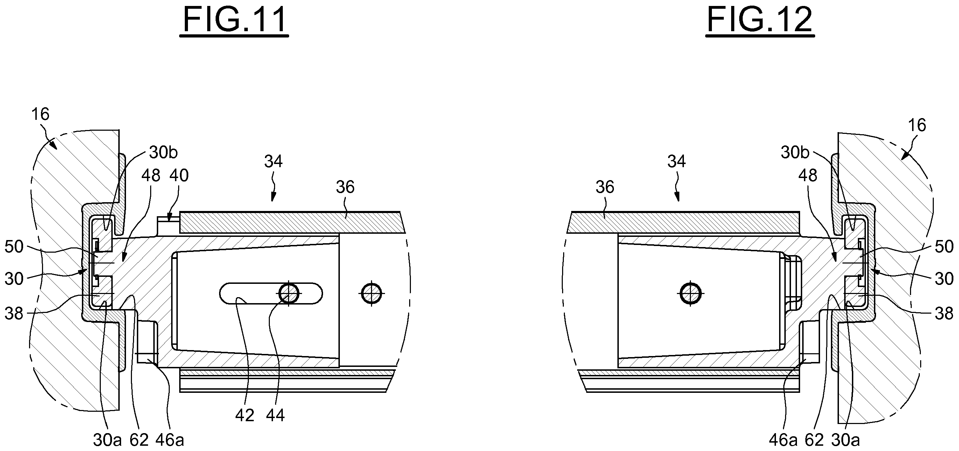

Comme illustré aux figures 11 et 12, dans la position bloquée de la poutre 34 le long des rails 30 de chargement, il existe un espace entre chaque galet 38 de la poutre et la piste 30a inférieure du rail associé tandis que chaque came 48 de blocage est en appui contre le fond de l'encoche 62 associée. Bien entendu, il existe également un tel espace entre chaque galet 38 et les pistes 26a inférieures des rails 26 dans une position bloquée de la poutre le long desdits rails. Ainsi, lorsque les marchandises sont posées sur la poutre, le poids de ces marchandises est supporté uniquement par les cames 48 de blocage, les embouts 40 et le corps 36 de la poutre. Les galets 38 sont délestés de cette reprise des efforts appliqués. Ceci est rendu possible par le fait que, dans la position bloquée ou verrouillée de la poutre, la came 48 s'étend verticalement au-delà du galet 38 associé.

De façon analogue, comme illustré aux figures 6 et 7, dans la position bloquée de la poutre 34 le long des rails 28 de rangement, il existe également un espace entre chaque galet 38 de la poutre et la piste 28a inférieure du rail associé, la came associée venant en contact contre ladite piste. Dans ce but, les pistes 28a inférieures des rails présentent une dimension transversale supérieure à celle des pistes 26a, 30a inférieure des rails de chargement.

Le dimensionnement relatif de la came 48 et du galet 38 associé permet donc de ne pas solliciter mécaniquement les galets 38 dans la position de rangement et dans la position de chargement et d'éviter ainsi une éventuelle dégradation. Ceci est particulièrement avantageux lorsque les galets 38 sont réalisés dans un matériau plus souple que celui utilisé pour les cames 48. En variante, si les galets 48 sont réalisés dans un matériau au moins aussi rigide que celui des cames 48, il est possible de prévoir, dans les positions de rangement et/ou de chargement des poutres, un contact entre les galets 38 et les pistes inférieures associées des rails de sorte à ce que les galets reprennent également les efforts appliqués par les marchandises.

Afin de manipuler les poutres 34 de support et/ou d'arrimage, une perche (non représentée) peut être utilisée. Une telle perche peut comprendre un doigt venant se verrouiller à l'intérieur d'une rainure prévue sur le corps 34 de la poutre à manipuler. En variante, il est possible d'utiliser une perche comprenant un manche et deux bras pourvus chacun à leur extrémité d'une pince présentant en section droite une forme adapté au profil rectangulaire des poutres 34.

Pour faire passer une poutre 34 de support et/ou d'arrimage de la position de rangement le long des rails 28 vers une position d'utilisation le long des rails 26 ou 30, un opérateur procède de la manière suivante. Dans une première étape, l'opérateur fait pivoter dans le sens horaire la poutre 34 afin de faire sortir les doigts 46a de verrouillage hors des crans 58 des crémaillères. Dans une deuxième étape, l'opérateur peut faire coulisser la poutre 34 le long des rails 28 de rangement jusqu'aux crans 60. Ensuite, lors d'une troisième étape, l'opérateur recule légèrement la poutre 34 et la fait pivoter dans le sens horaire de manière à ce que les doigts 46a de verrouillage sortent des crans 60 des crémaillères afin de pouvoir la faire glisser le long des rails 32 de liaison. Lors d'une quatrième étape, l'opérateur fait pivoter la poutre 34 de 90 degrés dans le sens horaire et la fait coulisser le long des rails 26 ou 30 de chargement jusqu'à la position souhaitée comme illustré à la figure 9.

Pour procéder ensuite au blocage longitudinal de la poutre 34, l'opérateur la fait pivoter de 90 degrés dans le sens antihoraire de sorte que les cames 48 de blocage se logent dans les encoches 62 des rails. On obtient ainsi, par la coopération des cames 48 et des encoches 62, le verrouillage ou blocage de la poutre 34 à la position souhaitée. Ce blocage est obtenu par une simple rotation de la poutre 34 sans qu'il soit nécessaire de prévoir une manipulation à chaque extrémité de la poutre, par exemple pour actionner un doigt de verrouillage mobile en translation.

Les cames 48 forment sur la poutre 34 des moyens de verrouillage coopérant avec des moyens de verrouillage complémentaires ménagés directement sur les rails 26 ou 30 de chargement, ou en variante rapportés sur lesdits rails ou sur les flancs 16, pour obtenir le blocage de la poutre 34 dans le sens longitudinal le long des rails. Dans l'exemple de réalisation illustré, le blocage des poutres le long des rails 26 ou 30 de chargement et le long des rails 28 de rangement sont réalisés par deux moyens distincts.

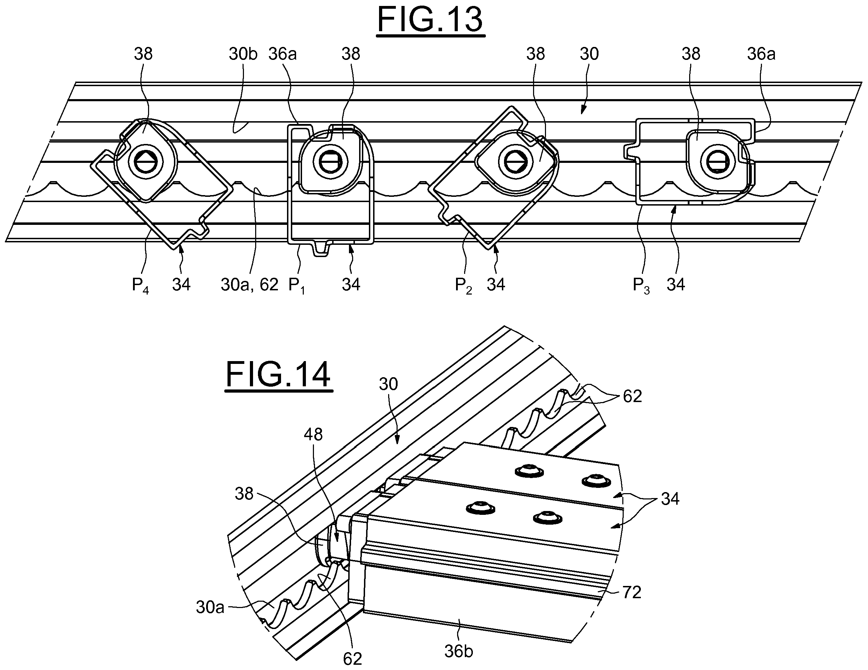

Comme illustré à la figure 13, pour faire passer une poutre 34 de la position de chargement verrouillée ou bloquée référencée P₁ vers une position débloquée en vue de son déplacement le long des rails 30 de chargement (ou 26), l'opérateur fait pivoter la poutre 34 dans le sens horaire en passant par la position intermédiaire référencée P₂ jusqu'à atteindre la position finale référencée P₃ à partir de laquelle la poutre peut être déplacée dans la mesure où chaque came 48 de blocage est complément située en-dehors de l'encoche 62 de coincement. Dans les positions référencées P₁ à P₃, il subsiste un espace vertical entre le galet 38 de la poutre et la piste 30b supérieure du rail. Dans la position finale P₃, la poutre 34 est dans une position horizontale avec la face supérieure 36a orientée vers l'avant. Dans la position bloquée P₁, la poutre est dans une position verticale avec la face supérieure 36a orientée vers le haut. Pour faire passer de la position bloquée à la position débloquée, l'opérateur fait pivoter la poutre 34 dans le sens horaire de 90°. La poutre 34 est mobile en rotation par rapport aux rails entre une première position angulaire bloquée ou verrouillée et une seconde position angulaire de coulissement.

Dans la position bloquée P₁, si l'opérateur fait pivoter la poutre dans le sens antihoraire, ce pivotement est bloqué par le coincement des galets 38 entre les pistes inférieure 30a et supérieure 30b du rail associé. Dans ce but, les galets 38 sont dimensionnés de sorte que leur plus grande dimension soit supérieure à l'espacement vertical prévu entre les pistes 30a, 30b du rail et sont montés sur la poutre 36 de sorte que cette grande dimension vienne se bloquer entre lesdites pistes uniquement lors d'une rotation dans le sens antihoraire. Seule une rotation de la poutre 34 dans le sens horaire permet un passage dans la position débloquée. La position référencée P₄ représente une position théorique de la poutre après pivotement dans le sens antihoraire de 45 degrés et illustrant un tel coincement.

De façon analogue, dans la position débloquée, les galets 38 de la poutre permettent uniquement un pivotement dans le sens antihoraire pour obtenir le passage dans la position bloquée. Ainsi, pour obtenir le passage de la poutre 34 de la position bloquée vers la position débloquée, et inversement, il faut faire pivoter la poutre selon deux sens de rotation opposés. La poutre 34 pivote autour d'un axe de pivotement longitudinal passant par les axes 50 de support.

Dans l'exemple de réalisation illustré, le blocage et déblocage de chaque poutre sont obtenus par pivotement de 90 degrés. En variante, la rotation de la poutre permettant le passage de la position verrouillée à la position déverrouillée, et inversement, pourrait être comprise dans une plage allant de 45 degrés à 90 degrés.

Dans l'exemple de réalisation, les galets 38 présentent une forme générale ovoïde de sorte à interférer avec les pistes inférieure et supérieure du rail si la poutre ne pivote pas selon le sens de rotation prédéterminé. En variante, il est possible de prévoir d'autres formes pour obtenir un tel coincement. Dans une autre variante de réalisation, il pourrait encore être possible de prévoir des galets de forme ronde et de ne pas bloquer le pivotement des poutres dans un sens de rotation depuis la position bloquée ou la position débloquée. Dans ce dernier cas, chaque galet peut être soit monté fixement sur son axe de support associé de sorte à obtenir un contact glissant avec les rails comme cela est le cas avec le galet de forme ovoïde, soit monté libre sur ledit axe pour obtenir un contact roulant avec les rails.

Pour permettre aux poutres 34 d'assurer une fonction d'arrimage des marchandises à l'arrière de celles-ci, chaque poutre 34 comprend du côté opposé aux rails 30 de liaison, i.e. vers l'avant, un bord supérieur 70 arrondi (figures 4 et 5) entre la face supérieure 36a du corps de poutre et la face verticale orientée du côté desdits rails. Le bord supérieur 70 arrondi présente avantageusement en section droite un profil en arc de cercle concentrique avec l'axe de pivotement de la poutre. Le bord supérieur 70 arrondi permet d'éviter une interférence avec les marchandises à arrimer lors du pivotement de la poutre.

Pour assurer une mise en place rapide des poutres 34 au niveau des rails de chargement, par exemple en permettant un déplacement par paire, chaque poutre comprend, au niveau de la face inférieure 36b du corps, une nervure 72 ménagée sur toute sa longueur et, au niveau de la face supérieure 36a, une gorge 74 complémentaire. La nervure 72 d'une poutre est prévue pour venir se loger dans la gorge 74 de la poutre immédiatement adjacente de sorte à obtenir un emboitement des poutres et permettre un déplacement simultané de ces poutres, par exemple par paire, comme cela est illustré à la figure 14.

Pour faire passer une poutre 34 de la position de chargement verrouillée vers la position de rangement, l'opérateur procède de la manière suivante. Dans une première étape, l'opérateur fait pivoter la poutre 34 dans le sens horaire de sorte que les cames 48 soient situées hors des encoches. Ensuite, lors d'une seconde étape, l'opérateur fait coulisser la poutre 34 le long des rails de chargement, des rails 32 de liaison et des rails 28 de rangement. Pour faire coulisser la poutre 34 le long des rails 28, l'opérateur fait pivoter la poutre 34 dans le sens horaire et la déplace jusqu'à la position longitudinale souhaitée. Ensuite, lors d'une troisième étape, l'opérateur fait pivoter la poutre dans le sens antihoraire de manière à ce que les doigts 46a de verrouillage en saillie viennent se loger à l'intérieur des encoches 58 des crémaillères.

Dans l'exemple de réalisation décrit, il est prévu trois paires de rails de chargement disposés sur les flancs à différentes hauteurs. En variante, il pourrait être possible de prévoir un nombre différents de paires de rails de chargement, par exemple un ou quatre ou plus. Dans l'exemple de réalisation illustré, les cames de blocage et les encoches associées sont prévues uniquement pour permettre le blocage des poutres au niveau des rails de chargement. En variante, il pourrait également être possible de prévoir des encoches au niveau des rails de rangement de sorte à obtenir également un blocage des poutres par l'intermédiaire de ces cames. Dans une autre variante, il pourrait encore être possible de ne pas prévoir de rails de liaison verticaux, ni de rails de rangement et d'avoir uniquement une ou des paires de rails de chargement.

Dans l'exemple de réalisation illustré, chaque came de blocage présente chacune une partie convexe venant pénétrer dans l'encoche concave associée. Dans une variante de réalisation, il pourrait être possible d'avoir une disposition inversée en prévoyant des cames comprenant chacune une encoche prévue pour recevoir une partie en saillie de forme complémentaire des rails formant élément de coincement ou d'arrêt.

Dans l'exemple de réalisation illustré, l'ensemble des moyens décrits montés sur les flancs verticaux de la carrosserie forment un système de support et/ou d'arrimage de marchandises pour le véhicule routier associé à cette carrosserie. Le système peut être utilisé pour supporter et/ou arrimer des marchandises dans d'autres applications, par exemples dans des entrepôts de stockage.

## Revendications

1. Système de support et/ou d'arrimage de marchandises, notamment pour véhicule routier de transport, comprenant au moins deux rails (30) disposés en regard, au moins une poutre (34) de support et/ou d'arrimage de marchandises montée à l'intérieur des rails en étant coulissante le long desdits rails, ladite poutre s'étendant transversalement entre lesdits rails et comprenant un corps (36) et un galet (38) monté en saillie à chaque extrémité du corps et logé à l'intérieur du rail associé, et des moyens de verrouillage pour obtenir un blocage de ladite poutre par rapport aux rails, **caractérisé en ce que** les moyens de verrouillage comprennent au moins une came de blocage (48) disposée sur ladite poutre et au moins un élément de coincement (62), ledit élément de coincement et la came de blocage étant aptes à pénétrer l'un à l'intérieur de l'autre et à coopérer par conjugaison de forme pour obtenir le blocage de la poutre de support et/ou d'arrimage après une première rotation de ladite poutre, et aptes à permettre le déblocage après une seconde rotation de la poutre.

2. Système selon la revendication 1, dans lequel l'élément de coincement est fixe par rapport au rail associé.

3. Système selon la revendication 1 ou 2, dans lequel la came de blocage est disposée à une extrémité de la poutre et l'élément de coincement est décalé vers l'intérieur par rapport à une piste (30a) du rail associé.

4. Système selon l'une quelconque des revendications précédentes, dans lequel la came de blocage et l'élément de coincement sont conformés pour permettre le passage de la poutre de support et/ou d'arrimage de la position bloquée vers la position débloquée, et inversement, par une rotation comprise entre 45 degrés et 90 degrés, et de préférence égale à 90 degrés.

5. Système selon l'une quelconque des revendications précédentes, dans lequel le rail associé à la came de blocage comprend une pluralité d'éléments de coincement (62) répartis sur toute la longueur dudit rail ou sur toute la longueur d'une portion dudit rail.

6. Système selon l'une quelconque des revendications précédentes, dans lequel le ou les éléments de coincement comprennent des encoches (62), la came de blocage venant se loger dans une des encoches dans la position bloquée de la poutre de support et/ou d'arrimage.

7. Système selon l'une quelconque des revendications précédentes, dans lequel au moins un desdits galets (38) est fixe en rotation par rapport au corps (36) et conformé de sorte à permettre une rotation de ladite poutre de la position bloquée vers la position débloquée uniquement dans un sens de rotation.

8. Système selon l'une quelconque des revendications précédentes, dans lequel la came de blocage (48) est disposée entre le corps (36) et le galet (38) associé.

9. Système selon l'une quelconque des revendications précédentes, dans lequel, dans la position bloquée de la poutre de support et/ou d'arrimage, la came de blocage (48) s'étend en saillie au-delà du galet (38) associé et un espace subsiste entre ledit galet et une piste (30a) inférieure du rail associé.

10. Système selon l'une quelconque des revendications précédentes, dans lequel la poutre de support et/ou d'arrimage comprend, à chaque extrémité du corps (36), un embout de support (40) du galet associé, l'un des deux embouts étant monté coulissant par rapport audit corps.

11. Système selon l'une quelconque des revendications précédentes, dans lequel la poutre de support et/ou d'arrimage comprend un corps (36) comprenant au moins un bord (70) supérieur arrondi.

12. Système selon l'une quelconque des revendications précédentes, dans lequel la poutre de support et/ou d'arrimage comprend un corps (36) comprenant, sur une face inférieure, au moins une nervure (72) s'étendant sur la majeure partie de ladite face et, sur une face supérieure opposée, une gorge (74) complémentaire.

13. Système selon l'une quelconque des revendications précédentes, comprenant au moins deux rails de chargement (26, 30) disposés en regard et s'étendant longitudinalement, deux rails de rangement (28) disposés en regard au-dessus des rails de chargement et s'étendant longitudinalement, et deux rails de liaison (32) disposés en regard et reliant les rails de chargement (26, 30) et de rangement (28), ladite poutre (34) de support et/ou d'arrimage étant montée coulissante le long des rails de rangement, de liaison et de chargement.

14. Système selon la revendication 13, comprenant deux crémaillères (56) disposées en regard, décalées vers l'intérieur par rapport aux pistes des rails de rangement (28) et pourvues chacune d'une pluralité de crans (58) de blocage, ladite poutre de support et/ou d'arrimage coopérant avec deux crans en regard pour le blocage longitudinal de ladite poutre par rapport auxdits rails de rangement.

15. Système selon la revendication 14, dans lequel chaque crémaillère comprend, du côté du rail de liaison (32) associé, un cran (60) antichute présentant une profondeur supérieure à celle des crans (58) de blocage et apte à coopérer avec la poutre de support et/ou d'arrimage.

16. Carrosserie pour véhicule routier de transport de marchandises comprenant un système de support et/ou d'arrimage de marchandises selon l'une quelconque des revendications précédentes monté sur deux flancs verticaux opposés de ladite carrosserie.

## Patentansprüche

1. System zum Stützen und/oder Sichern von Waren, insbesondere für ein Straßentransportfahrzeug, das mindestens zwei einander gegenüber angeordnete Schienen (30), mindestens einen Balken (34) zum Stützen und/oder Sichern von Waren, der im Inneren der Schienen montiert ist und entlang der Schienen gleitet, wobei der Balken sich quer zwischen den Schienen erstreckt und einen Körper (36) und eine Laufrolle (38) enthält, die vorstehend an jedem Ende des Körpers montiert und im Inneren der zugeordneten Schiene untergebracht ist, und Verriegelungseinrichtungen enthält, um eine Sperrung des Balkens bezüglich der Schienen zu erhalten, **dadurch gekennzeichnet, dass** die Verriegelungseinrichtungen mindestens einen auf dem Balken angeordneten Sperrnocken (48) und mindestens ein Einklemmelement (62) enthalten, wobei das Einklemmelement und der Sperrnocken ineinander dringen und durch Formkonjugation zusammenwirken können, um die Sperrung des Stütz- und/oder Sicherungsbalkens nach einer ersten Drehung des Balkens zu erhalten, und die Freigabe nach einer zweiten Drehung des Balkens erlauben können.

2. System nach Anspruch 1, wobei das Einklemmelement bezüglich der zugeordneten Schiene ortsfest ist.

3. System nach Anspruch 1 oder 2, wobei der Sperrnocken an einem Ende des Balkens angeordnet und das Einklemmelement bezüglich einer Laufbahn (30a) der zugeordneten Schiene nach innen versetzt ist.

4. System nach einem der vorhergehenden Ansprüche, wobei der Sperrnocken und das Einklemmelement ausgebildet sind, um den Übergang des Stütz- und/oder Sicherungsbalkens von der gesperrten Stellung in die freigegebene Stellung und umgekehrt durch eine Drehung zwischen 45 Grad und 90 Grad, und vorzugsweise gleich 90 Grad, zu erlauben.

5. System nach einem der vorhergehenden Ansprüche, wobei die dem Sperrnocken zugeordnete Schiene eine Vielzahl von Einklemmelementen (62) enthält, die über die ganze Länge der Schiene oder über die ganze Länge eines Teils der Schiene verteilt sind.

6. System nach einem der vorhergehenden Ansprüche, wobei das oder die Einklemmelemente Kerben (62) enthalten, wobei der Sperrnocken sich in der gesperrten Stellung des Stütz- und/oder Sicherungsbalkens in eine der Kerben einfügt.

7. System nach einem der vorhergehenden Ansprüche, wobei mindestens eine der Laufrollen (38) bezüglich des Körpers (36) drehfest und so ausgebildet ist, dass sie eine Drehung des Balkens von der gesperrten Stellung in die freigegebene Stellung nur in einer Drehrichtung erlaubt.

8. System nach einem der vorhergehenden Ansprüche, wobei der Sperrnocken (48) zwischen dem Körper (36) und der zugeordneten Laufrolle (38) angeordnet ist.

9. System nach einem der vorhergehenden Ansprüche, wobei in der gesperrten Stellung des Stütz- und/oder Sicherungsbalkens der Sperrnocken (48) sich über die zugeordnete Laufrolle (38) hinaus vorstehend erstreckt und ein Zwischenraum zwischen der Laufrolle und einer unteren Laufbahn (30a) der zugeordneten Schiene bleibt.

10. System nach einem der vorhergehenden Ansprüche, wobei der Stütz- und/oder Sicherungsbalken an jedem Ende des Körpers (36) einen Stützaufsatz (40) der zugeordneten Laufrolle enthält, wobei einer der zwei Aufsätze bezüglich des Körpers gleitend montiert ist.

11. System nach einem der vorhergehenden Ansprüche, wobei der Stütz- und/oder Sicherungsbalken einen Körper (36) enthält, der mindestens einen abgerundeten oberen Rand (70) enthält.

12. System nach einem der vorhergehenden Ansprüche, wobei der Stütz- und/oder Sicherungsbalken einen Körper (36) enthält, der an einer Unterseite mindestens eine Rippe (72), die sich über den größten Teil der Seite erstreckt, und an einer gegenüberliegenden Oberseite eine komplementäre Rille (74) enthält.

13. System nach einem der vorhergehenden Ansprüche, das mindestens zwei Ladeschienen (26, 30), die einander gegenüber angeordnet sind und sich in Längsrichtung erstrecken, zwei Aufbewahrungsschienen (28), die einander gegenüber über den Ladeschienen angeordnet sind und sich in Längsrichtung erstrecken, und zwei Verbindungsschienen (32) enthält, die einander gegenüber angeordnet sind und die Ladeschienen (26, 30) und Aufbewahrungsschienen (28) verbinden, wobei der Stütz- und/oder Sicherungsbalken (34) entlang der Aufbewahrungs-, Verbindungs- und Ladeschienen gleitend montiert ist.

14. System nach Anspruch 13, das zwei einander gegenüber angeordnete Zahnstangen (56) enthält, die bezüglich der Laufbahnen der Aufbewahrungsschienen (28) nach innen versetzt und je mit einer Vielzahl von Sperrrasten (58) versehen sind, wobei der Stütz- und/oder Sicherungsbalken mit zwei gegenüberliegenden Rasten zur Längssperrung des Balkens bezüglich der Aufbewahrungsschienen zusammenwirkt.

15. System nach Anspruch 14, wobei jede Zahnstange auf der Seite der zugeordneten Verbindungsschiene (32) eine Absturzsicherungsraste (60) enthält, die eine größere Tiefe als diejenige der Sperrrasten (58) aufweist und mit dem Stütz- und/oder Sicherungsbalken zusammenwirken kann.

16. Karosserie für ein Warentransport-Straßenfahrzeug, die ein Stütz- und/oder Sicherungssystem von Waren nach einem der vorhergehenden Ansprüche enthält, das auf zwei gegenüberliegende senkrechte Flanken der Karosserie montiert ist.

## Claims

1. System for supporting and/or lashing goods, notably for a road transport vehicle, comprising at least two rails (30) arranged facing each other, at least one goods lashing and/or supporting beam (34) mounted in the rails with the ability to slide along the said rails, the said beam extending transversely between the said rails and comprising a body (36) and a runner (38) mounted as a projection at each end of the body and housed inside the associated rail, and locking means for immobilizing the said beam with respect to the rails, **characterized in that** the locking means comprise at least one immobilizing cam (48) arranged on the said beam and at least one wedging element (62), the said wedging element and the immobilizing cam being able to enter one another and through positive engagement to collaborate to achieve the immobilizing of the lashing and/or supporting beam after a first rotation of the said beam, and able to allow unlocking after a second rotation of the beam.

2. System according to Claim 1, in which the wedging element is fixed with respect to the associated rail.

3. System according to Claim 1 or 2, in which the immobilizing cam is arranged at one end of the beam and the wedging element is offset towards the inside with respect to a runway (30a) of the associated rail.

4. System according to any one of the preceding claims, in which the immobilizing cam and the wedging element are shaped to allow the lashing and/or supporting beam to pass from the immobilized position to the unlocked position and vice versa through a rotation of between 45º and 90º, and preferably of 90º.

5. System according to any one of the preceding claims, in which the rail associated with the immobilizing cam comprises a plurality of wedging elements (62) distributed along the entire length of the said rail or along the entire length of a portion of the said rail.

6. System according to any one of the preceding claims, in which the wedging element or elements comprise notches (62), the immobilizing cam becoming housed in one of the notches when the lashing and/or supporting beam is in the immobilized position.

7. System according to any one of the preceding claims, in which at least one of the said runners (38) is fixed in terms of rotation with respect to the body (36) and configured in such a way as to allow the said beam to rotate from the immobilized position into the unlocked position in only one direction of rotation.

8. System according to any one of the preceding claims, in which the immobilizing cam (48) is arranged between the body (36) and the associated runner (38).

9. System according to any one of the preceding claims, in which, when the lashing and/or supporting beam is in the immobilized position, the immobilizing cam (48) projects out beyond the associated runner (38) and a space remains between the said runner and a lower runway (30a) of the associated rail.

10. System according to any one of the preceding claims, in which the lashing and/or supporting beam comprises, at each end of the body (36), a supporting end piece (40) for the associated runner, one of the two end pieces being mounted with the ability to slide with respect to the said body.

11. System according to any one of the preceding claims, in which the lashing and/or supporting beam comprises a body (36) comprising at least one rounded upper edge (70).

12. System according to any one of the preceding claims, in which the lashing and/or supporting beam comprises a body (36) comprising, on a lower face, at least one rib (72) extending over the majority of the said face and, on an opposite upper face, a complementary groove (74).

13. System according to any one of the preceding claims, comprising at least two loading rails (26, 30) arranged facing one another and extending longitudinally, two storage rails (28) arranged facing one another above the loading rails and extending longitudinally, and two connecting rails (32) arranged facing one another and connecting the loading (26, 30) and storage (28) rails, the said lashing and/or supporting beam (34) being mounted with the ability to slide along the storage, connecting and loading rails.

14. System according to Claim 13, comprising two racks (56) arranged facing one another, offset towards the inside with respect to the runways of the storage rails (28) and each provided with a plurality of immobilizing notches (58), the said lashing and/or supporting beam collaborating with two notches facing one another in order to immobilize the said beam longitudinally with respect to the said storage rails.

15. System according to Claim 14, in which each rack comprises, on the side of the associated connecting rail (32), a fall-prevention notch (60) of a depth greater than that of the immobilizing notches (58) and able to collaborate with the lashing and/or supporting beam.

16. Bodywork for a road vehicle for transporting goods comprising a goods lashing and/or supporting system according to any one of the preceding claims mounted on two opposite vertical sidewalls of the said bodywork.
